# EUROPEAN PATENT APPLICATION

(11) **EP 1 551 072 A2**
(43) Date of publication of application: **06.07.2005**
(21) Application number: 04256992.1
(22) Date of filing: 11.11.2004
(51) Int. Cl.: H01M 6/36, H01M 10/50

(54) **Thermal batteries using cathode-precursor pyrotechnic pellets**

(30) Priority: 12.11.2003 US 704612
(71) Applicant: RAFAEL - ARMAMENT DEVELOPMENT AUTHORITY LTD., Haifa 31021 (IL)
(72) Inventor: Dekel, Dario R. (Machado), Ramat Yishay (IL); Laser, Daniel, Haifa (IL)
(74) Representative: Fenlon, Christine Lesley

(57) **Abstract**

A thermal battery which comprises a number of stacked cells, each cell consisting essentially of an anode with a lithium compound, a lithium free pyrotechnic heat source pellet which includes a cathode precursor and an all lithium electrolyte layer separating between the anode and the pyrotechnic heat source pellet. Upon ignition of the heat source, an oxide of the cathode precursor is obtained which is lithiated by the lithium supplied by the all lithium electrolyte ion source.

## Description

This invention relates to the improvement of thermal batteries, more particularly to the increasing of power and operational longevity of "cathode-less" thermal batteries.

Thermal batteries are thermally activated, primary reserve, hermetically sealed power sources generally consisting of series or series-parallel arrays of cells. Each cell comprises of an anode, an electrolyte-separator, a cathode and a pyrotechnic heat source.

Typically, the electrolyte is a mixture of alkali metal halides, for example an eutectic mixture of KCl-LiCl which melt at about 350°C. Common cathode materials among others are iron disulfide and cobalt sulfide. Transition metal oxides such as iron oxide can be used as cathode material as well.

Lithium-iron or lithium alloys such as lithium-aluminum and lithium-silicon are generally used as anode materials. The pyrotechnic material is a mixture of high surface area iron powder and potassium perchlorate. The main role of this pyrotechnic material is to provide when being ignited the thermal cell with the exact heat needed to melt the electrolyte.

The exothermic mixture used in the pyrotechnic material bums at a controlled rate, it must not melt, should not produce gas, it must have a caloric output that can be closely controlled. It has to be insensitive enough to be pelleted without igniting, then be able to be lit reliably over a wide temperature range and after ignition it must be electrically conductive, because the burnt pyrotechnic pellets form the inter-cell electrical connectors.

Near stochiometric ratios of the components of the exothermic mixture (i.e. 63wt% Fe and 37wt% KClO₄) produce temperatures high enough to melt iron, so to moderate the reaction, to control the rate of burning and to produce a conductive ash, mixtures containing no more than 17% of perchlorate can be used with iron, which upon burning form a thermodynamically stable oxide Fe_{0.947}O, which is dispersed within the particles of the excessive iron.

Recently, U.S. Patent No. 5,770,329 to Harney, incorporated by reference for all purposes as if fully set forth herein, describes a thermal battery in which the pyrotechnic pellets serve also as cathode precursor wafers which after the generation of heat supply the cathode material of the battery cells, thus eliminating the need for distinct cathode layers.

Thermal batteries, which are produced according to "329" patent suffer from two major inherent drawbacks which limit their power delivery capability as well as their operation life time:
Firstly the concentration of the cathode material (i.e. the iron oxide) formed by the burning of the exothermic mixture in the cathode-precursor pyrotechnic pellet is low.
This is so because, as was said before, it is practically impossible to increase the amount of the oxidizing compound (e.g. KClO₄) relative to the amount of the iron powder over a weight ratio of 17:83 respectively. Thus the maximum weight concentration of the FeO formed in the matrix of the pyrotechnic pellet can reach only to about 30%.

Secondly, the utilization of the formed cathode material by Li⁺ ions during battery operation (the intercalation process) is low; This is so because the "329" patent does not teach an appropriate way to "flood" the formed FeO particles with surrounding Li⁺ ions.

An attempt according to the "329" patent to replace some or all of the KClO₄ in the pyrotechnic pellet with LiClO₄ results with an Li⁺ ion concentration of at most of about 8%. Other trials to increase the Li⁺ concentration by stuffing the pyrotechnic pellet with non oxidizing lithium salts (as LiCl-KCl eutectic mixture) have the following drawbacks:

They lower too much the specific caloric value of the pellet and by this increase the battery rise time, they decrease the pellets electronic conduction and besides, the embedded lithium salts in the pyrotechnic pellet absorbs humidity extensively.

Thus, the batteries according to the invention of the "329" patent are applicable only at small current densities and have a short life-time.

Embodiments of the present invention seek to alleviate these drawbacks and to provide other related advantages.

Embodiments of the present invention preferably provide a "cathode-less" thermal battery, which is based on a conventional iron KClO₄ pyrotechnic component and on an all-lithium electrolyte separator.

According to a first aspect of the present invention there is provided a thermal battery of the type heated to an operating temperature having a plurality of stacked cells, each cell consisting essentially of: (a) an anode which includes a lithium compound; (b) a substantially lithium free pyrotechnic heat source, the pyrotechnic heat source includes a cathode precursor, and (c) a separator separating between said anode and said pyrotechnic heat source, said separator includes an LiCl-LiBr-LiF mixture having the lowest melting point for a mixture with such constituents.

According to a second aspect of the present invention there is provided a method for improving power and operational life-time of a thermal battery, the method comprises the steps of: (a) providing a thermal battery, said thermal battery having a pyrotechnic heat source wherein a metal in said pyrotechnic heat source performs as a cathode precursor (b) igniting said pyrotechnic heat source obtaining an oxide of said metal, and (c) using an all-lithium electrolyte as a lithium ion source for a lithization of said oxide of said metal.

Preferred embodiments of the present invention seek to provide a thermal battery capable of sustaining current densities up to about 1000 mA/cm².

It is also advantageous for embodiments of the present invention to provide a thermal battery with an extended life-time and/or to provide a more reliable thermal battery and/or to provide a thermal battery having reduced dimensions at a reduced production cost.

Other preferred features of the present invention will become apparent upon reading the following description in conjunction with the following figures.

For a better understanding of the present invention, and to show how the same may be carried into effect, reference will now be made, by way of example to the accompanying drawings in which:
FIGS. 1A and 1B show a traverse section of a thermal cell of a "cathode-less" thermal battery and of a conventional battery respectively;
FIG. 2 shows a discharge curve of a prior art "cathode-less" battery of example 1;
FIG. 3 shows a discharge curve of a "cathode-less" battery embodying the present invention, which is described in example 2;
FIG. 4 shows a discharge curve of a prior art "cathode-less" battery of example 4;
FIG. 5 shows a discharge curve of a "cathode-less" battery embodying the present invention, which is described in example 5;
FIG. 6 shows a discharge curve of a prior art "cathode-less" battery of example 6; and
FIG. 7 shows a discharge curve of a "cathode-less" battery embodying the present invention, which is described in example 7.

The present embodiments herein are not intended to be exhaustive and to limit in any way the scope of the invention, rather they are used as examples for the clarification of the invention and for enabling of other skilled in the art to utilize its teaching.

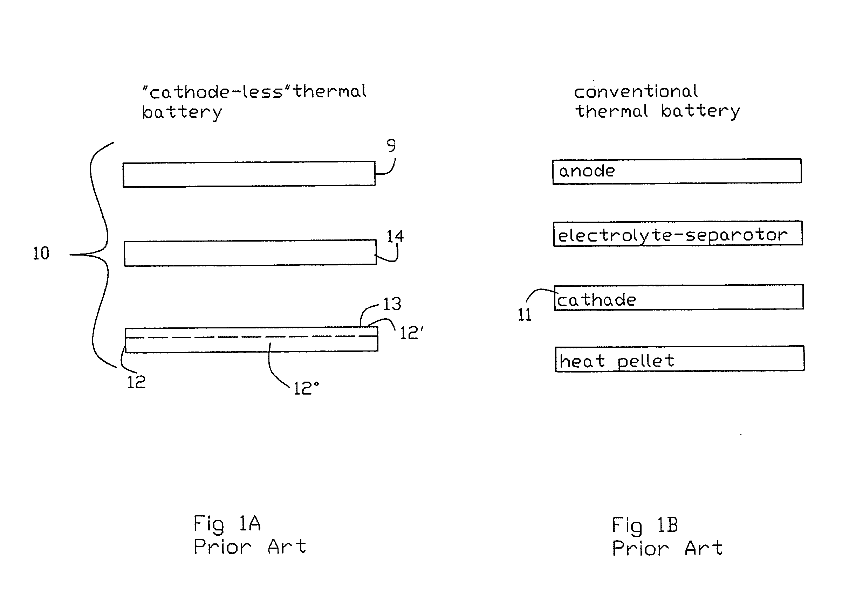

FIG. 1A depicts a typical cell **10** of what is being referred hereinafter as a "cathode-less" thermal battery, in which a cathode **11** of a cell of a conventional thermal battery, shown in FIG. 1B to which reference is now made, becomes redundant.

As explained above, a prerequisite for satisfactorily operation of a "cathode-less" thermal battery **10,** in which an oxidized pyrotechnic precursor (not shown) in pyrotechnic pellet **12** is used as the cathode material, is a high rate of lithization of the formed oxidized pyrotechnic precursor particles by surrounding Li⁺ ions (not shown). This demands high concentration of Li⁺ ions in pyrotechnic pellet **12.**

It was also explained why it is unlikely that a major contribution to the needed Li⁺ ion concentration can originate form lithium salts, which were dispersed in advance in pyrotechnic pellet 12.

Embodiments of the present invention make use of the fact that it is only a narrow layer 12' of pyrotechnic pellet 12 beneath the pyrotechnic pellet surface 13 which contacts electrolyte layer 14, which takes place in the Li⁺ intercalation process. The rest 12" of the thickness of pyrotechnic pellet 12 is substantially intact with respect to any electrochemical change and merely conduct electrons.

Thus it is needed to supply Li⁺ ions to layer 12' only, rather then to entire pellet 12.

Because the limited volume of layer 12' and the intimate contact of interface 13 with electrolyte wafer 14, it is possible to build up the concentration of Li⁺ ions which is needed in region 12', by Li⁺ ion transfer from electrolytic layer 14, provided that the Li⁺ ion flux toward layer 12' will be sufficiently high.

To accomplish such high flux, a separator, which is composed of a mixture of LiF, LiCl and LiBr in an appropriate weight ratio which corresponds to a composition having the lowest melting point of any mixtures of these constituents was used.

The preparation, properties and use of such a mixture of lithium salts which will be defined hereinafter as "all-lithium electrolyte" or "all-lithium eutectic" is prior art which is described e.g. in *the proceedings of the 33*^{*rd*} *international power sources symposium*, 13-16 June 1988, published and distributed by the Electrochemical society Inc, pages 369-392.

There, the applicability of the all-lithium electrolyte to (conventional) thermal batteries with extreme current density is demonstrated.

It was also reported that lithiating of the cathode layer by the all-lithium electrolyte is so extensive that it proceeds at an appreciable rate even at room temperature, see e.g. U.S. Patent No. 5,900,331 to Krieger.

We disclosed in the present invention that the beneficial effect of the all-lithium electrolyte in extending "cathode-less" batteries life-time as compared to an electrolyte having the conventional LiCl-KCl eutectic composition (45% wt: 55% wt respectively) is far more pronounced then is anticipated in accordance to the enrichment (by about 55%) in the Li⁺ ion content of the all-lithium electrolyte, as compared to the LiCl-KCl eutectic.

The way in which such non-obvious improvement in batteries performance occurs will now be explained:

One problem associated with the all-lithium electrolyte is its relative high melting point (445°C, as compared to the melting point of 350°C for the LiCl-KCl eutectic). This causes the discharge voltage of a conventional battery employing the all-lithium electrolyte to drop as soon as the temperature of the battery cools below 460°C.

In Japanese Patent No. 02 021568 A to Tsukamoto Hisashi, a method is disclosed to extend the life-time of an all-Li electrolyte conventional thermal battery (in which the electrolyte in the cathode is the first to freeze) which comprises of adding KCl to the cathode material.

The KCl added reacts with the lithium ions which enters the cathode layer during the battery discharge to produce a LiCl-KCl eutectic which has a relatively lower melting point then the all-Li electrolyte, thus the performance at low temperatures is improved and the battery gains a longer life-time.

The point to emphasise here is that in accordance with the present invention, the oxidizing agent in the pyrotechnic pellet is substantially KClO₄, which upon oxidation converts into KCl, thus a situation similar to that described in Japanese Patent No. 02 021568 A is reproduced in-situ.

Consequently, from one hand an all-lithium electrolyte is the favourable electrolyte for a "cathode-less" battery, which needs an extensive lithization. From the other hand the initially lithium free pyrotechnic heat source which contains KClO₄ is a favourable candidate to be effected by the all-lithium electrolyte.

This cooperative effect which results from a combination of a pyrotechnic pellet having KClO₄ as the oxidizing agent together with an all-lithium electrolyte, to provide the highest performing "cathode-less" electrochemical cell, is neither rendered obvious nor can it be anticipated by a skilled person in the art of thermal batteries.

Generally, the cells of the improved batteries according to the present invention include an anode 9, a substantially lithium free pyrotechnic heat source 12, which includes a cathode precursor and an all-lithium electrolyte separator 14, which is disposed between anode 9 and pyrotechnic heat source 12.

Pyrotechnic cathode-precursor according to embodiments of the present invention comprises a physical mixture of high surface area iron powder and potassium perchlorate and can also include additives. The additives in this invention may comprise other oxides, lithium ionic compounds such as lithium perchlorate, lithium chloride, or a mixture of them.

The over all weight ratio of iron-potassium perchlorate-additives is 60% to 90% iron, 2% to 20% potassium perchlorate, and up to 10% additives. It should be noted that other transition metals such as Co, Ni, Mn, Cu, V, Cr and combinations thereof could be used as pyrotechnic cathode precursor besides iron as well, In such cases the weight percentage of the potassium perchlorate can be some times higher whenever the heat of formation of the oxides is smaller.

When using iron, the pyrotechnic cathode-precursor pellets were prepared by blending vacuum dried -200 mesh iron powder with potassium perchlorate having grain size of 4 to 7 µm together with eventually added additives powders in a Turbula mixer for about one hour.

The weight ratio of the mix is about 60-90% Fe powder, 2-20% KClO₄, and up to 10% additives. The additives are lithium perchlorate fine powder (Fluka-Germany), lithium chloride fine powder (Merck-Germany) or a mixture of them.

The homogeneous blend is then pressed at 0.5 to 3 ton/cm² to obtain 14 or 30 mm diameter pyrotechnic pellets.

Electrolyte-separator pellets are formed according to well-known procedures. The pellets comprise about 40wt % to 60wt % MgO binder with an LiCl-LiF-LiBr mixture at the lowest melting point composition, (weight proportions of 22%-9.6%-68.4% respectively).

The separator wafers were prepared by pressing a fused all-lithium electrolyte-MgO mixture at 0.5 to 3 ton/cm² into 14 or 30 mm diameter pellets.

Anodes were prepared by blending lithium-aluminium alloy powder, eutectic LiCl-KCl electrolyte, and iron powder at about 64:16:20 weight ratio, following by pressing the mix at 1.5-2.5 ton/cm² into 14 or 30 mm diameter anode pellets.

All anode and separator pellets were prepared in a dry room environment having a relative humidity of less than 1%.

The following examples, which are illustrative only and do not limit the invention, demonstrate the performance of "cathode-less" batteries according to the present invention and compares their properties with "cathode-less" batteries according to prior art.

### EXAMPLE 1 (prior art)

Two "cathode-less" thermal batteries were assembled. The batteries consist of two sections; a 24V section and a 7V section, made of 30mm diameter cells. Each cell comprises 0.28gr anode, 0.67gr KCl-LiCl electrolyte-separator (having 55:45 weight percent ratio respectively) and 0.97gr cathode-precursor pyrotechnic (CPP) pellet. The CPP pellet composition was Fe-KClO₄ at a weight percent ratio of 83:17 respectively. This composition provided about 314 cal/pellet at a burning rate of about 100 mm/sec without any significant gas formation.

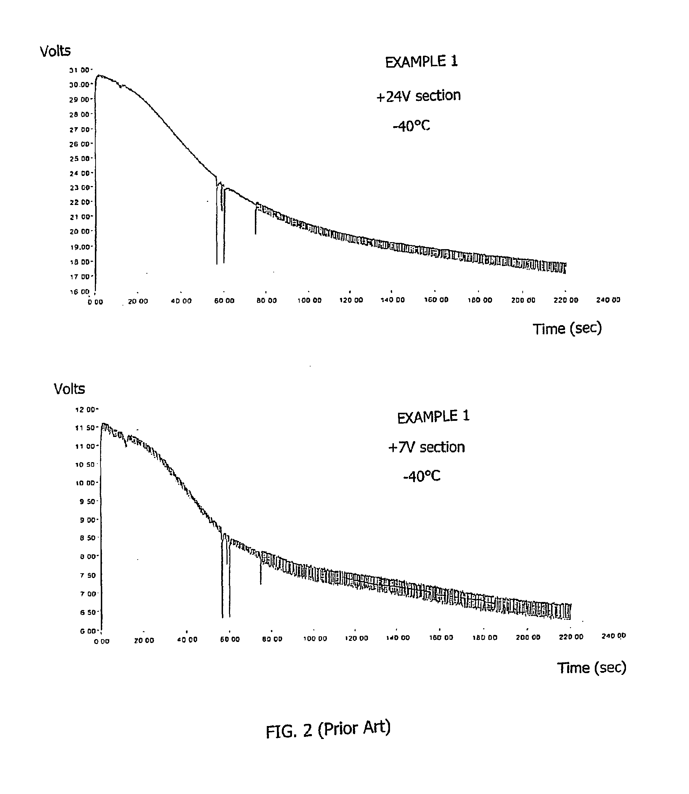

The batteries were conditioned at -40°C and -60°C and then discharged at a constant load of 0.3A with several pulses of 5A up to 13A. The discharge data are summarised in Table 1 and the discharge curves of the -40°C battery are shown in FIG. 2.

In Table 1 and the forthcoming Tables; Rise- time and Life-time are defined as the two periods which passed since the activation of the battery until the section's voltage crosses a predetermined fraction of its nominal value.

**Table 1.**

| discharge data of "cathode-less" thermal batteries of example 1. | | | | |
|---|---|---|---|---|
| discharge temperature | +24V section | | +7V section | |
| | Rise-time, msec | Life time, sec | Rise-time, msec | Life time, sec |
| -40°C | 78 | 53 | 61 | 170 |
| -60 °C | 81 | 52 | 64 | 150 |

### EXAMPLE 2 (embodying the present invention)

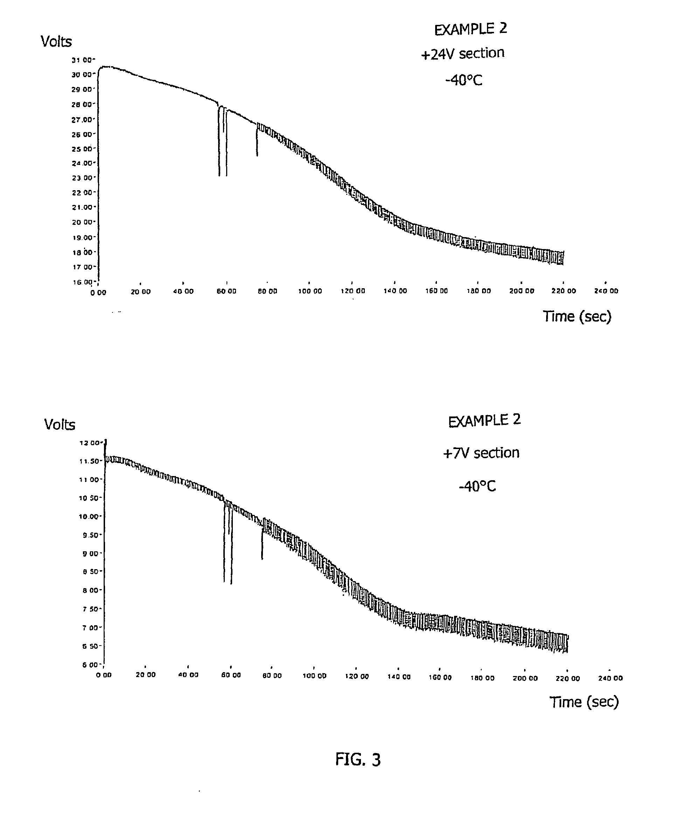

The same batteries as in example 1 were built with the only exception of having the LiF-LiCl-LiBr electrolyte-separator instead of the KCl-LiCl electrolyte-separator. The discharge data are summarised in Table 2 and the discharge curve of the -40°C battery is shown in FIG. 3.

**Table 2.**

| discharge data of "cathode-less" thermal batteries of example 2. | | | | |
|---|---|---|---|---|
| discharge temperature | +24V section | | +7V section | |
| | Rise time, msec | Life time, sec | Rise time, msec | Life time, sec |
| -40 °C | 81 | 102 | 54 | 185 |
| -60 °C | 79 | 102 | 53 | 175 |

### EXAMPLE 3 (embodying the present invention)

One "cathode-less" thermal battery was assembled. The battery consists of two strings of 20, 30 mm diameter cells, connected in parallel to give an 28V section. Each cell comprises 0.28gr anode, 0.67gr LiF-LiCl-LiBr electrolyte-separator and 0.85gr cathode-precursor pyrotechnic (CPP) pellet. The CPP pellet composition was Fe-KClO₄ at a weight ratio of 83:17 respectively. This composition provided about 270 cal/pellet at a burning rate of about 100 mm/sec without any significant gas formation.

The battery was discharged at room temperature at a constant load of 15A with pulses of 20A every second (not shown). The battery rise time was 65 msec while the life-time to 28V was larger than 5 sec. A same "cathode-less" LiCl-KCl reference battery collapses at these operation conditions from the first moment of its activation and no life-time time can be defined.

### EXAMPLE 4 (prior art)

One "cathode-less" thermal battery was assembled. The battery consists of 10, 30 mm diameter cells. Each cell mainly comprises 0.28gr anode, 0.75gr LiCl-KCl (45:55 weight ratio respectively) electrolyte-separator and 1.54gr CPP pellet. The CPP pellet composition was Fe-KClO₄ at a ratio of 86:14 by weight respectively. This composition provided about 400 cal/pellet at a burning rate of about 90 mm/sec without any significant gas formation.

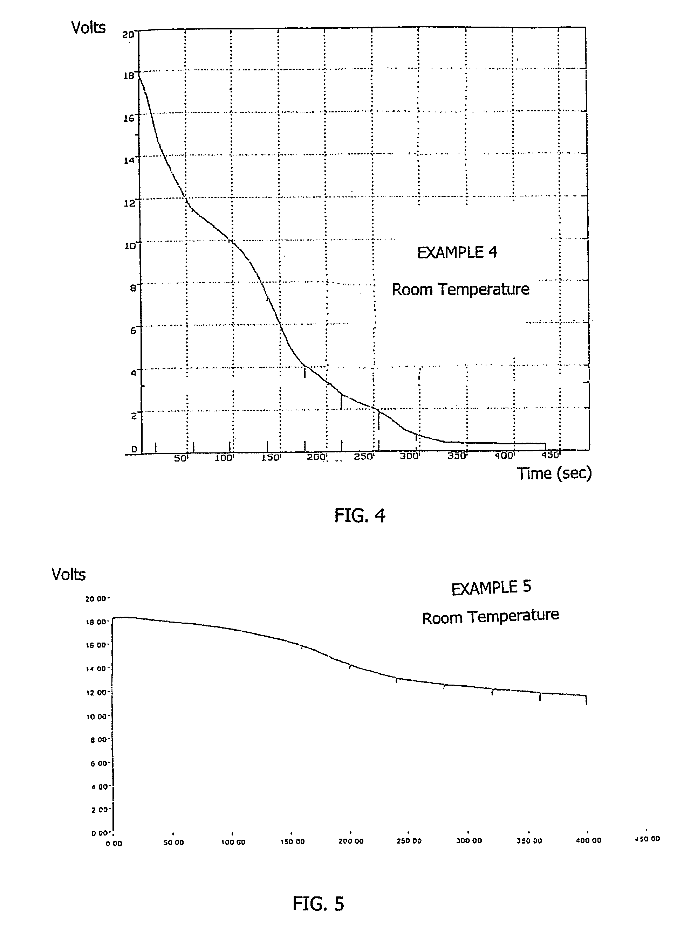

The battery was discharge at room temperature at a constant load of 300 mA with pulses of 0.5A every 40 sec. The battery life-time to 14V was 25 sec as is shown in FIG. 4 to which reference is now made.

### EXAMPLE 5 (embodying the present invention)

The same battery as in example 4 was built with the only exception of having the LiF-LiCl-LiBr eutectic electrolyte instead of the LiCl-KC electrolyte. The battery life-time to 14V extends to 200 sec. as is shown in FIG. 5 to which reference is now made.

### EXAMPLE 6 (prior art)

Two "cathode-less" thermal batteries were assembled. The batteries consist of three sections (+12V, -12V and +2.8V) made of cells of 14 mm in diameter. Each cell comprises 0.06gr anode, 0.12gr KCl-LiCl electrolyte-separator (35:65 weight ratio respectively) and 0.2gr CPP pellet. The pellet composition was Fe:KClO₄ at a ratio of 83:17 by weight respectively. This composition provided about 65 cal/pellet at a burning rate of about 100 mm/sec without any significant gas formation.

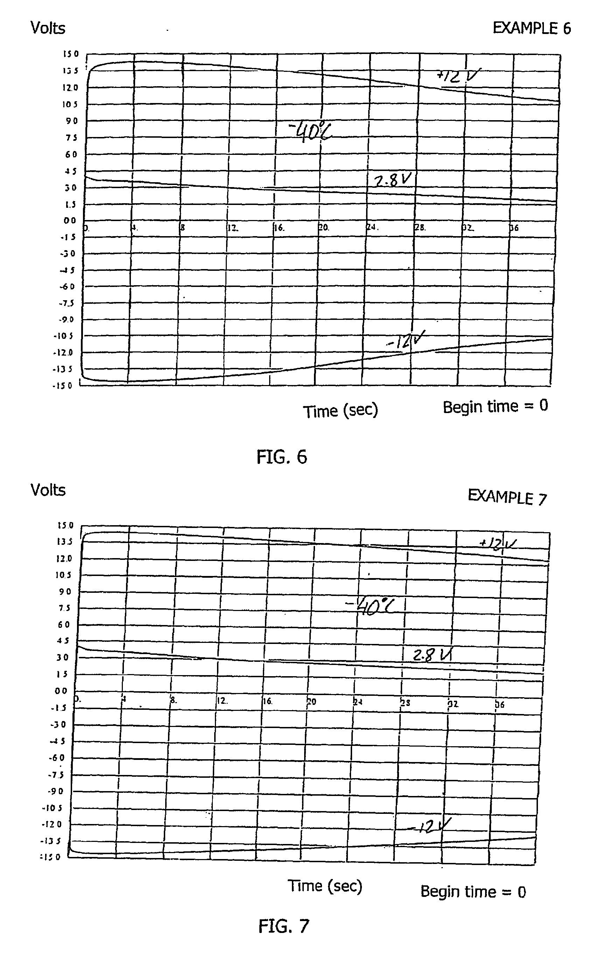

The batteries were cold conditioned at -40°C and +25°C and then discharge through a constant resistance of 150Ω (+12V and -12V sections) and 1.87Ω (+2.8V section). The discharge data are summarised in Table 3 and the discharge curve of the -40°C battery is shown in Fig. 6 to which reference is now made.

**Table 3.**

| discharge data of "cathode-less" thermal batteries of example 6. | | | | | | |
|---|---|---|---|---|---|---|
| discharge temperature | +12V section | | -12V section | | +2.8V section | |
| | Rise time, msec | Life time, sec | Rise time, msec | Life time, sec | Rise time, msec | Life time, sec |
| -40°C | 96 | 19 | 68 | 21 | 50 | 15 |
| +25°C | 112 | 28 | 82 | 28 | 60 | 15 |

### EXAMPLE 7 (embodying the present invention)

The same batteries as in example 7 were built with the only exception of having the LiF-LiCl-LiBr eutectic electrolyte instead of the LiCl-KCl eutectic. The discharge data are summarized in Table 4 and the discharge curves of the -40°C battery are shown in Fig. 7 to which reference is now made.

**Table 4.**

| discharge data of "cathode-less" thermal batteries of example 7. | | | | | | |
|---|---|---|---|---|---|---|
| discharge temperature | +12V section | | -12V section | | +2.8V section | |
| | Rise time, msec | Life time, sec | Rise time, msec | Life time, sec | Rise time, msec | Life time, sec |
| -40°C | 96 | >40 | 82 | >40 | 52 | 19 |
| +25°C | 98 | 21 | 68 | 32 | 48 | 19 |

While the invention has been described with respect to a limited number of embodiments, it will be appreciated that many variations, modifications and other applications of the invention may be made without departing from the spirit and scope of the invention.

## Claims

1. A thermal battery of the type heated to an operating temperature having a plurality of stacked cells, each cell consisting essentially of:
(a) an anode which includes a lithium compound;
(b) a substantially lithium free pyrotechnic heat source which includes a cathode precursor, and
(c) an all lithium separator separating between said anode and said pyrotechnic heat source.

2. The thermal battery as in claim 1 wherein said pyrotechnic heat source includes potassium perchlorate (KClO₄).

3. The thermal battery as in claim 2 wherein a concentration of said potassium perchlorate in said heat source is between about 10wt% to about 30wt%.

4. The thermal battery as in claim 1, 2 or 3, wherein said cathode precursor is selected from the group comprising of iron, cobalt, nickel, copper, manganese, vanadium, chromium and combinations thereof.

5. The thermal battery as in any preceding claim, wherein said all-lithium separator includes a LiCl-LiBr-LiF eutectic.

6. A method for improving power and operational life-time of a thermal battery, the method comprises the steps of:
(a) providing a thermal battery, said thermal battery having a pyrotechnic heat source wherein a metal in said pyrotechnic heat source consists a cathode precursor;
(b) igniting said pyrotechnic heat source to obtain an oxide of said metal, and
(c) using an all-lithium electrolyte as a lithium ion source for a lithization of said oxide of said metal.

7. The method as in claim 6 wherein said pyrotechnic heat source includes potassium perchlorate (KClO₄).

8. The method as in claim 7 wherein a concentration of said potassium perchlorate in said heat source is between about 10wt% to about 30wt%.

9. The method as in claim 6, 7 or 8 wherein said cathode precursor is selected from the group comprising of iron, cobalt, nickel, copper, manganese, vanadium, chromium and combinations thereof.

10. The method as in claim 6, 7, 8 or 9 wherein said all-lithium electrolyte includes an LiCl-LiBr-LiF eutectic.
